# EUROPEAN PATENT SPECIFICATION

(11) **EP 3 255 779 B1**
(45) Date of publication and mention of the grant of the patent: **21.10.2020**
(21) Application number: 17173663.0
(22) Date of filing: 31.05.2017
(51) Int. Cl.: H02P 9/30, H02P 9/38, H02P 5/74, H02P 29/024

(54) **RECONFIGURABLE MULTI-PERMANENT MAGNET GENERATOR BASED POWER GENERATING SYSTEM**
REKONFIGURIERBARES, AUF MULTI-PERMANENTMAGNETGENERATOR BASIERENDES ENERGIEERZEUGUNGSSYSTEM
SYSTÈME DE PRODUCTION DE PUISSANCE PARUN GÉNÉRATEUR À AIMANT MULTI-PERMANENT RECONFIGURABLE

(30) Priority: 08.06.2016 US 201615176232
(43) Date of publication of application: 13.12.2017
(73) Proprietor: Hamilton Sundstrand Corporation, Charlotte, NC 28217 (US)
(72) Inventor: ROZMAN, Gregory I., Rockford, IL 61114 (US); GIERAS, Jacek F., Glastonbury, CT 06033 (US); MOSS, Steven J., Rockford, IL 61114 (US)
(74) Representative: Dehns

(56) References cited:
- EP-A1- 2 330 723
- EP-A1- 3 012 438
- WO-A1-2008/012853

## Description

### TECHNICAL FIELD

The present disclosure relates generally to a reconfigurable permanent magnet generator based power generating system, and more specifically to a power generating system including dual voltage regulated permanent magnet generators.

### BACKGROUND

Certain vehicles, such as ground based vehicles, favor hybrid electric technology using high voltage electrical power generating as a primary power source for vehicle components. Many such applications utilize one or more permanent magnet generators (PMG) to generate power due to the high power density of permanent magnet generators. Permanent magnet generators convert rotational motion into electrical output power via the interaction between a magnetic field of one or more permanent magnets and an armature including multiple power windings. In typical permanent magnet generator arrangements, the excitation of rotor flux cannot be excited due to the nature of permanent magnets, and the permanent magnet generator may operate in an undesirable manner during short circuit conditions.

In some example vehicles, output voltage regulation is achieved utilizing two permanent magnet generators connected in series. By adjusting the position of the stator windings of the first permanent magnet generator, relative to the position of the stator windings of the second permanent magnet generator, the combined output stator voltage can be controlled over a wide range of speed and load configurations. This type of voltage regulation is achieved by physically actuating one of the stator windings.

Voltage regulated permanent magnet generators that operate based on the known principle of saturation can regulate the output voltage over a wide speed and load range. However, saturation based permanent magnet generators are similarly limited in controlling the output voltage to zero volts.

WO 2008/012853 teaches an energy conversion generation system.

### SUMMARY OF THE INVENTION

The present invention is defined by a high voltage power generating system according to claim 1. In one exemplary embodiment a high voltage power generating system includes a first poly-phase permanent magnet generator including at least one control winding and a plurality of power windings, a second poly-phase permanent magnet generator including at least one control winding and a plurality of power windings, the first and second poly-phase permanent magnet generators being arranged in series in at least one operational mode, and the first poly-phase permanent magnet generator being phase shifted relative to the second poly-phase permanent magnet generator such that residual voltage output of the first poly-phase permanent magnet generator is offset by the second poly-phase permanent magnet generator during a first operational mode.

In another exemplary embodiment of the above described high voltage power generating system the first operational mode is a short circuit condition at a power generating bus.

In another exemplary embodiment of any of the above described high voltage power generating systems the first poly-phase permanent magnet generator is connected to an input of the second poly-phase permanent magnet generator via a first set of switches and connected to a first power generating bus via a second set of switches, the first set of switches and the second set of switches having an inverted state relative to each other.

In another exemplary embodiment of any of the above described high voltage power generating systems an input of the second poly-phase permanent magnet generator is connected to a second power generating bus via a third set of switches, and an output of the second poly-phase permanent magnet generator is connected to the first power generating bus via a fourth set of switches, the third set of switches and the fourth set of switches having an inverted state relative to each other.

In another exemplary embodiment of any of the above described high voltage power generating systems the state of each set of switches is controlled by a generator control unit, and wherein the first set of switches and the third set of switches are closed during said first operational mode.

In another exemplary embodiment of any of the above described high voltage power generating systems the first power generating bus and the second power generating bus are AC busses.

In another exemplary embodiment of any of the above described high voltage power generating systems the first power generating bus and the second power generating bus are DC busses.

Another exemplary embodiment of any of the above described high voltage power generating systems further includes a selectively removable neutral node connected to an output of said second poly-phase permanent magnet generator via a DC rectifier.

In another exemplary embodiment of any of the above described high voltage power generating systems each of said poly-phase permanent magnet generators has an identical number of phases.

In another exemplary embodiment of any of the above described high voltage power generating systems each of said poly-phase permanent magnet generators has three phases.

An exemplary method for achieving null output voltage of a power generating system including multiple permanent magnet generators includes reducing a control current of a first permanent magnet generator to zero, detecting a residual output of the first permanent magnet generator, and controlling a control current to a second permanent magnet generator, such that the second permanent magnet generator generates an offsetting voltage, thereby reducing the residual voltage to 0 volts.

In another example of the above described exemplary method for achieving null output voltage of a power generating system including multiple permanent magnet generators reducing the control current of the first permanent magnet generator to zero, detecting the residual output of the first permanent magnet generator, and controlling a control current to a second permanent magnet generator, such that the second permanent magnet generator generates an offsetting voltage, are performed in response to detecting a short circuit event at a power generating bus.

Another example of any of the above described exemplary methods for achieving null output voltage of a power generating system including multiple permanent magnet generators further includes reconfiguring a power generating system such that the first permanent magnet generator and the second permanent magnet generator are arranged in series in response to detecting the short circuit event.

In another example of any of the above described exemplary methods for achieving null output voltage of a power generating system including multiple permanent magnet generators reconfiguring the power generating system comprises inverting at least a first, second, third and fourth set of switches.

Another example of any of the above described exemplary methods for achieving null output voltage of a power generating system including multiple permanent magnet generators further includes removing a selectively removable neutral node from said second permanent magnet generator.

In another example of any of the above described exemplary methods for achieving null output voltage of a power generating system including multiple permanent magnet generators removing the selectively removable neutral node comprises opening a switch.

These and other features of the present invention can be best understood from the following specification and drawings, the following of which is a brief description.

### BRIEF DESCRIPTION OF THE DRAWINGS

Figure 1 schematically illustrates a high voltage power generating system including two voltage regulated three-phase permanent magnet generators.
Figure 2 schematically illustrates a second example high voltage power generating system including two voltage regulated three-phase permanent magnet generators.
Figure 3 illustrates a method to achieve null output voltage regulation of a power generating system including multiple voltage regulated permanent magnet generators.

### DETAILED DESCRIPTION OF AN EMBODIMENT

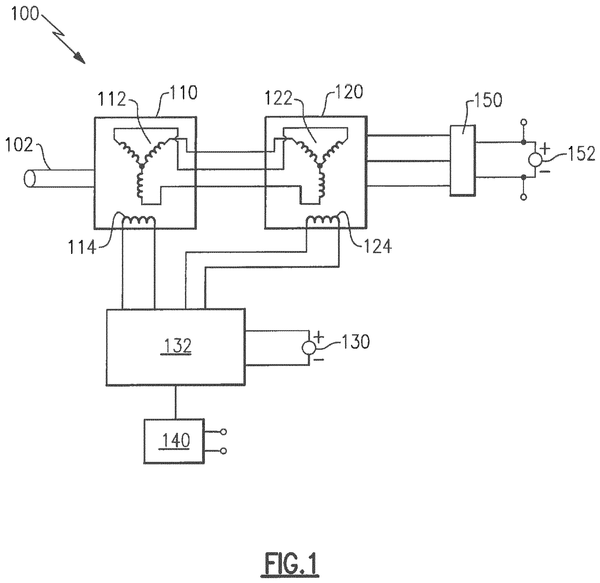

Figure 1 schematically illustrates a high voltage power generating system 100. The power generating system 100 includes a first voltage regulated permanent magnet generator 110 and a second voltage regulated permanent magnet generator 120. The permanent magnet generators 110, 120 are connected to a shaft 102 and receive a rotational input from the shaft 102.

Each permanent magnet generator 110, 120, includes a three-phase armature windings 112, 122. Each phase on the armature windings 112, 122 is alternatively referred to as a power winding. Also included within each of the permanent magnet generators 110, 120 is a control winding 114, 124. The control windings 114, 124 are connected to a DC voltage source 130 via a switched current regulator 132. The switched current regulator 132 controls current in each control winding 114, 124 separately, thereby allowing for independent power output control of each of the permanent magnet generators 110, 120. A generator control unit 140 is connected to, and controls, the switched current regulator 132, thereby controlling the output voltage of the system. The generator control unit 140 provides further generator controls as needed, according to known generator control unit operations.

An output of the second permanent magnet generator 120 is provided to a DC rectifier 150 that converts the three phase output to a DC power, and provides the DC power to a load 152, such as a DC power bus.

The respective phases of the armature windings 112, 122 of each of the permanent magnet generators 110, 120 are connected in series. The armature windings 122 of the second permanent magnet generator 120 are phase shifted, relative to the armature windings 112 of the first permanent magnet generator 110, such that a zero voltage combined output condition is created when the control current of the first control winding 114 is set to zero, and the control current of the second control winding 124 is set to match a residual output voltage of the first permanent magnet generator 110, and is above zero volts.

During normal operation (e.g. when no short circuit is present on the bus 150), the generator control unit 140 receives signals from the output DC voltage of the first permanent magnet generator 110 and regulates the output voltage of the system 100 by controlling the current through the first current winding 114 using the switched current regulator 132. During this mode of operations, the current through the second control winding 124 is maintained at zero amps.

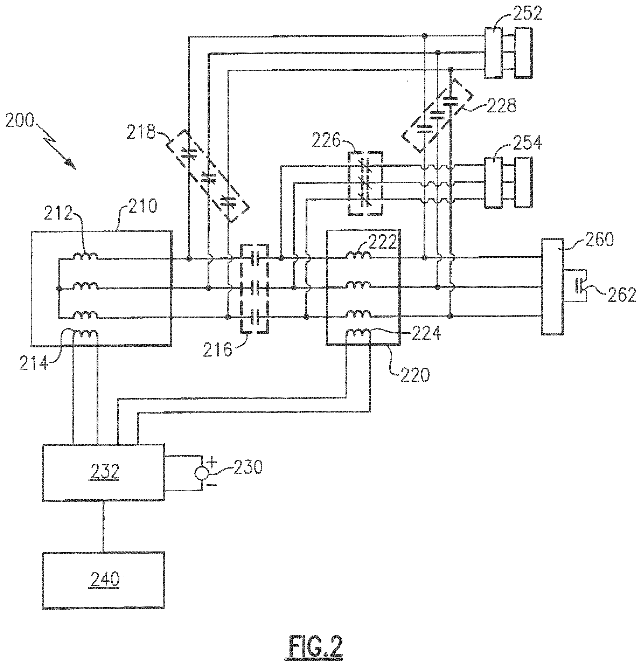

When a short circuit condition is present, the generator control unit 140 sets the current through the first control winding 114 to zero amps, and the control current through the second control winding 124 is set to a level that reduces the residual output voltage of the first permanent magnet generator 110 to zero volts. Thus, the high voltage DC power generating system of Figure 2, utilizes the two independently controlled control windings 114, 124 and the phase shifted armature windings 112, 114 to prevent a power output during a short circuit event.

While illustrated in Figure 1 as a DC power generating system 100, one of skill in the art will recognize that some power generating systems utilize poly-phase AC power generating. With continued reference to Figure 2, and with like numerals indicating like elements, Figure 2 schematically illustrates a high voltage power generating system 200 configured to provide AC power to a load, such as a high voltage AC bus 252 and a low voltage AC bus 254. As with the DC power generating system 100 of Figure 1, the AC power generating system 200 includes two voltage regulated permanent magnet generators 210, 220, each of which includes a three-phase armature windings 212, 222 and at least one control winding 214, 224. The control windings 214, 224 are independently controlled by a switched current regulator 232, which is, in turn, controlled by a generator control unit 240. A DC power source 230 is connected to the switched current regulator 232.

An output of each phase of the first voltage regulated permanent magnet generator 210 is connected to an input of the corresponding phase in the second voltage regulated permanent magnet generator 220 by a first set of switches 216. The output of each phase is also connected directly to the AC bus 252 via a second switches 218. The first set of switches 216 and the second set of switches 218 are controlled by the generator control unit 240 such that when the first set of switches 216 is closed (conducting), the second set of switches 218 is open (non-conducting).

Similarly, an input of each phase of the armature 224 of the second permanent magnet generator 220 is connected to a low voltage AC generating bus 254 by a third set of switches 226, and an output of each phase is connected to the high voltage AC bus 252 by a fourth set of switches 228. The third set of switches 226 and the fourth set of switches 228 are controlled by the generator control unit 240 so that while the third set of switches 226 is closed (conducting), the fourth set of switches 228 is open (non-conducting), and vice-versa.

Also connected to each phase of the second permanent magnet generator 220 is a DC rectifier 260 and a selectively removable neutral node 262. The selectively removable neutral node 262 is a switch that, when closed, provides a neutral connection (node) between all phases of the second permanent magnet generator 220 armature 224. By way of example, the neutral node 262 is, in some embodiments, a transistor. When the switch is opened, no neutral exists between the phases, and power is not output. The state of the selectively removable neutral node 262 is controlled by the generator control unit 240. During practical operations, the selectively removable neutral node 262 is normally maintained in a closed position, and is opened when a short circuit condition is detected.

Under standard (non-short circuit) conditions, the first permanent magnet generator 210 outputs power to the high voltage AC power generating bus 252 through the second set of switches 218, and the second permanent magnet generator 220 outputs power to the low voltage AC power generating bus 260 through the fourth set of switches 226. The neutral point of the second permanent magnet generator 220 is the selectively removable neutral node 262, and is connected to the neutral node 262 by a DC rectifier 260. In some examples the DC rectifier 260 is a three-phase diode bridge, and the selectively removable neutral node 262 is connected across the negative rails of the diode bridge. While closed (conducting), the selectively removable neutral node 262 effectively creates the neutral point for the second permanent magnet generator 220. At the same time, the first and third sets of switches 216, 228 are maintained open.

In the illustrated example, the control current through each of the control windings 214, 224 is controlled by an asymmetric H-bridge within a switched current regulator 232. This control maintains the respective RMS voltage at specified value by controlling current in the control coil of respective voltage regulated PMG. Control is achieved by the generator control unit 240 which includes functions for power input conditioning, voltage regulation of each of the permanent magnet generators 210, 220, current limiting, gate drives, and any other known function(s).

When a short circuit occurs on the high voltage AC bus 252, the first and third sets of switches 216, 228 close and the second and fourth sets of switches 218, 226 open. This effectively alters the configuration of the permanent magnet generators 210, 220. After inverting the state of all the switches 216, 218, 226, 228, during a short circuit event, the first permanent magnet generator 210 and the second permanent magnet generator 220 are arranged in a series configuration, and the selectively removable neutral node 262 is opened, removing the neutral from the second permanent magnet generator 220. Due to the series connection between the permanent magnet generators, 210, 220 the neutral node of the first permanent magnet generator 210 functions as the neutral node 262 for both permanent magnet generators 210, 220. Once in the series configuration with the selectively removable neutral being open, the permanent magnet generators 210, 220 are electrically similar to the system 100 of Figure 1, and is controlled in the manner described above with regards to Figure 1.

While described and illustrated in Figures 1 and 2 as three phase systems, one of skill in the art will understand that the illustrated embodiments can be adapted to suit any poly-phase system, and are not limited to the illustrated three phase configuration. Furthermore, one of skill in the art, having the benefit of this disclosure, will understand that the power generating system 200 illustrated in Figure 2 can be adapted to provide DC power to a high voltage DC power generating bus and a low voltage DC power generating bus, in the same manner as the three phase power generating system 200 provides power to the high voltage AC bus 252 and low voltage AC bus 262.

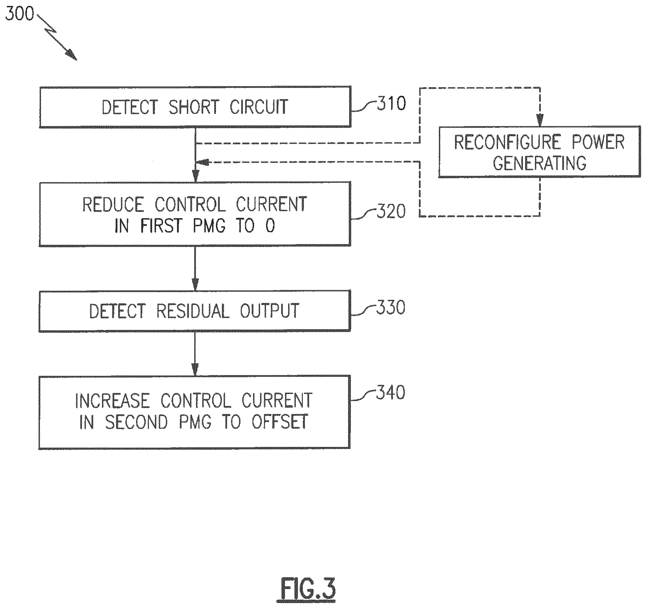

With continued reference to Figures 1 and 2, Figures 3 illustrates a method 300 for achieving a null output voltage in a power generating system having multiple permanent magnet generators. Initially, a generator controller 140, 240 detects a short circuit at the power generating bus 150, 252, 254 using any known short circuit detection technique in a "Detect Short Circuit" step 310.

Once a short circuit is detected, the controller reduces a control current in a first control winding 114, 214 to zero in a "Reduce Control Current in First PMG to 0" step 320. Reduction of the control current has the effect of reducing the output voltage of the first permanent magnet generator 110, 210 to residual levels.

The generator controller 140, 240 then detects the residual voltage levels in the "Detect Residual Output" step 330. Based on the detected residual output, the generator control unit 140, 240 determines a magnitude of control current to be applied to the phase shifted second permanent magnet generator. 120, 220 in order to generate an opposite output power and drive the net output voltage to 0. The generator controller then increases the control current in the second control winding 124, 224 accordingly in an "Increase Control Current in Second PMG to Offset" step 340.

In some examples, such as the system of Figure 2, where the first permanent magnet generator 210 drives a high power bus 252 and the second permanent magnet generator 220 drives a low power bus 254, the generator controller 240 further includes a "Reconfigure Power Generating" step 312 immediately after the detection of the short circuit. The reconfiguring is described above with regards to the examples of Figure 2, and places the two permanent magnet generators 210, 220 in a series allowing the following steps 320, 33, 340 to function properly.

It is further understood that any of the above described concepts can be used alone or in combination with any or all of the other above described concepts. Although an embodiment of this invention has been disclosed, a worker of ordinary skill in this art would recognize that certain modifications would come within the scope of this invention as defined by the claims. For that reason, the following claims should be studied to determine the true scope and content of this invention.

## Claims

1. A high voltage power generating system comprising:
a first poly-phase permanent magnet generator (110) including at least one control winding (114) and a plurality of power windings (112);
a second poly-phase permanent magnet generator (120) including at least one control winding (124) and a plurality of power windings (122);
the first and second poly-phase permanent magnet generators being arranged in series in at least one operational mode; and
the first poly-phase permanent magnet generator being phase shifted relative to the second poly-phase permanent magnet generator such that residual voltage output of the first poly-phase permanent magnet generator is offset by the second poly-phase permanent magnet generator during a first operational mode;
**characterised in that** the first poly-phase permanent magnet generator (110) is connected to an input of the second poly-phase permanent magnet generator (120) via a first set of switches (216) and connected to a first power generating bus via a second set of switches (218), the first set of switches and the second set of switches having an inverted state relative to each other.

2. The high voltage power generating system of claim 1, wherein the first operational mode is a short circuit condition at a power generating bus.

3. The high voltage power generating system of claim 1 or 2, wherein an input of the second poly-phase permanent magnet generator is connected to a second power generating bus via a third set of switches (226), and an output of the second poly-phase permanent magnet generator is connected to the first power generating bus via a fourth set of switches, the third set of switches and the fourth set of switches having an inverted state relative to each other.

4. The high voltage power generating system of claim 3, wherein the state of each set of switches is controlled by a generator control unit, and wherein the first set of switches and the third set of switches are closed during said first operational mode.

5. The high voltage power generating system of claim 3, wherein the first power generating bus and the second power generating bus are AC busses, or wherein the first power generating bus and the second power generating bus are DC busses.

6. The high voltage power generating system of any preceding claim, further comprising a selectively removable neutral node (262) connected to an output of said second poly-phase permanent magnet generator via a DC rectifier (260).

7. The high voltage power generating system of any preceding claim, wherein each of said poly-phase permanent magnet generators has an identical number of phases.

8. The high voltage power generating system of claim 7, wherein each of said poly-phase permanent magnet generators has three phases.

## Patentansprüche

1. Hochspannungsenergieerzeugungssystem, umfassend:
einen ersten mehrphasigen Permanentmagnetgenerator (110), der zumindest eine Steuerwicklung (114) und eine Vielzahl von Energiewicklungen (112) beinhaltet;
einen zweiten mehrphasigen Permanentmagnetgenerator (120), der zumindest eine Steuerwicklung (124) und eine Vielzahl von Energiewicklungen (122) beinhaltet;
wobei der erste und zweite mehrphasige Permanentmagnetgenerator in zumindest einem Betriebsmodus in Reihe geschaltet sind; und
der erste mehrphasige Permanentmagnetgenerator bezogen auf den zweiten mehrphasigen Permanentmagnetgenerator phasenverschoben ist, sodass eine Restspannungsausgabe des ersten mehrphasigen Permanentmagnetgenerators während eines ersten Betriebsmodus durch den zweiten mehrphasigen Permanentmagnetgenerator ausgeglichen wird;
**gekennzeichnet dadurch,**
**dass** der erste mehrphasige Permanentmagnetgenerator (110) über einen ersten Satz von Schaltern (216) mit einem Eingang des zweiten mehrphasigen Permanentmagnetgenerators (120) verbunden ist und über einen zweiten Satz von Schaltern (218) mit einem ersten Energieerzeugungsbus verbunden ist, wobei der erste Satz von Schaltern und der zweite Satz von Schaltern bezogen aufeinander einen umgekehrten Zustand aufweisen.

2. Hochspannungsenergieerzeugungssystem nach Anspruch 1, wobei der erste Betriebsmodus eine Kurzschlussbedingung an einem Energieerzeugungsbus ist.

3. Hochspannungsenergieerzeugungssystem nach Anspruch 1 oder 2, wobei ein Eingang des zweiten mehrphasigen Permanentmagnetgenerators über einen dritten Satz von Schaltern (226) mit einem zweiten Energieerzeugungsbus verbunden ist und ein Ausgang des zweiten mehrphasigen Permanentmagnetgenerators über einen vierten Satz von Schaltern mit dem ersten Energieerzeugungsbus verbunden ist, wobei der dritte Satz von Schaltern und der vierte Satz von Schaltern bezogen aufeinander einen umgekehrten Zustand aufweisen.

4. Hochspannungsenergieerzeugungssystem nach Anspruch 3, wobei der Zustand jedes Satzes von Schaltern durch eine Generatorsteuereinheit gesteuert wird und wobei der erste Satz von Schaltern und der dritte Satz von Schaltern während des ersten Betriebsmodus geschlossen sind.

5. Hochspannungsenergieerzeugungssystem nach Anspruch 3, wobei der erste Energieerzeugungsbus und der zweite Energieerzeugungsbus AC-Busse sind oder wobei der erste Energieerzeugungsbus und der zweite Energieerzeugungsbus DC-Busse sind.

6. Hochspannungsenergieerzeugungssystem nach einem der vorangehenden Ansprüche, ferner umfassend einen selektiv entfernbaren neutralen Knoten (262), der über einen Gleichstromrichter (260) mit einem Ausgang des zweiten mehrphasigen Permanentmagnetgenerator verbunden ist.

7. Hochspannungsenergieerzeugungssystem nach einem der vorangehenden Ansprüche, wobei jeder der mehrphasigen Permanentmagnetgeneratoren eine identische Anzahl an Phasen aufweist.

8. Hochspannungsenergieerzeugungssystem nach Anspruch 7, wobei jeder der mehrphasigen Permanentmagnetgeneratoren drei Phasen aufweist.

## Revendications

1. Système de production de puissance haute tension comprenant :
un premier générateur à aimant permanent polyphasé (110) comportant au moins un enroulement de commande (114) et une pluralité d'enroulements de puissance (112) ;
un second générateur à aimant permanent polyphasé (120) comportant au moins un enroulement de commande (124) et une pluralité d'enroulements de puissance (122) ;
les premier et second générateurs à aimant permanent polyphasé étant disposés en série dans au moins un mode de fonctionnement ; et
le premier générateur à aimant permanent polyphasé étant déphasé par rapport au second générateur à aimant permanent polyphasé de sorte que la sortie de tension résiduelle du premier générateur à aimant permanent polyphasé est décalée par le second générateur à aimant permanent polyphasé pendant un premier mode de fonctionnement ;
**caractérisé en ce que**
le premier générateur à aimant permanent polyphasé (110) est connecté à une entrée du second générateur à aimant permanent polyphasé (120) par l'intermédiaire d'un premier ensemble de commutateurs (216) et connecté à un premier bus de production de puissance par l'intermédiaire d'un second ensemble de commutateurs (218), le premier ensemble de commutateurs et le second ensemble de commutateurs ayant un état inversé l'un par rapport à l'autre.

2. Système de production de puissance haute tension selon la revendication 1, dans lequel le premier mode de fonctionnement est une condition de court-circuit au niveau d'un bus de production de puissance.

3. Système de production de puissance haute tension selon la revendication 1 ou 2, dans lequel une entrée du second générateur à aimant permanent polyphasé est connectée à un second bus de production de puissance par l'intermédiaire d'un troisième ensemble de commutateurs (226), et une sortie du second générateur à aimant permanent polyphasé est connecté au premier bus de production de puissance par l'intermédiaire d'un quatrième ensemble de commutateurs, le troisième ensemble de commutateurs et le quatrième ensemble de commutateurs ayant un état inversé l'un par rapport à l'autre.

4. Système de production de puissance haute tension selon la revendication 3, dans lequel l'état de chaque ensemble d'interrupteurs est commandé par une unité de commande de générateur, et dans lequel le premier ensemble d'interrupteurs et le troisième ensemble d'interrupteurs sont fermés pendant ledit premier mode de fonctionnement.

5. Système de production de puissance haute tension selon la revendication 3, dans lequel le premier bus de production de puissance et le second bus de production de puissance sont des bus à courant alternatif, ou dans lequel le premier bus de production de puissance et le second bus de production de puissance sont des bus à courant continu.

6. Système de production de puissance haute tension selon une quelconque revendication précédente, comprenant en outre un nœud neutre sélectivement amovible (262) connecté à une sortie dudit second générateur à aimant permanent polyphasé par l'intermédiaire d'un redresseur à courant continu (260).

7. Système de production de puissance haute tension selon une quelconque revendication précédente, dans lequel chacun desdits générateurs à aimant permanent polyphasé a un nombre identique de phases.

8. Système de production de puissance haute tension selon la revendication 7, dans lequel chacun desdits générateurs à aimant permanent polyphasé a trois phases.
